Europäisches Patentamt

European Patent Office

Office européen des brevets

(11) Numéro de publication: **0 170 025**
**B1**

(12) **FASCICULE DE BREVET EUROPÉEN**

(45) Date de publication du fascicule du brevet:
**25.01.89**

(21) Numéro de dépôt: **85107504.4**

(22) Date de dépôt: **18.06.85**

(51) Int. Cl.⁴: **B 01 D 13/00,** B 01 D 29/32,
B 01 D 46/24, F 16 L 7/00

(54) **Dispositif d'assemblage d'élément filtrant tubulaire dans une enveloppe.**

(30) Priorité: **20.06.84 FR 8409687**

(43) Date de publication de la demande:
**05.02.86 Bulletin 86/6**

(45) Mention de la délivrance du brevet:
**25.01.89 Bulletin 89/4**

(84) Etats contractants désignés:
**BE CH DE FR GB IT LI NL SE**

(56) Documents cité:
**EP-A-0 092 839**
**FR-A-1 178 480**
**FR-A-1 227 401**
**FR-A-1 280 034**
**FR-A-1 573 289**
**FR-A-2 536 743**

(73) Titulaire: **CERAVER Société anonyme dite:, 10,
quai Paul- Doumer, F-92400 Courbevoie (FR)**

(72) Inventeur: **Garcera, Daniel, 2bis, boulevard de
l'Abattoir, F-65000 Tarbes (FR)**
Inventeur: **Gillot, Jacques, 5, impasse de la Hount
Odos, F-65310 Laloubere (FR)**

(74) Mandataire: **Weinmiller, Jürgen, Lennéstrasse 9
Postfach 24, D-8133 Feldafing (DE)**

## EP 0 170 025 B1

**Description**

La présente invention concerne un dispositif d'assemblage d'au moins un élément filtrant tubulaire dans une enveloppe entourant cet élément, comprenant un joint en matériau élastomère ou polymère disposé à au moins l'une des extrémités de l'élément filtrant et de l'enveloppe entre la surface externe de l'élément filtrant et la surface interne de l'enveloppe, la surface externe de l'élément filtrant étant munie de rugosités sur au moins une partie de la longeur en regard du joint. Un tel dispositif est connu, par exemple, du document FR-A-2 536 743. L'invention s'applique particulièrement, mais non exclusivement, aux dispositifs de filtration par faisceaux de tubes poreux, ou à ceux de séparation par membrane pour la filtration, l'ultra- filtration ou l'osmose inverse, qui on fait l'objet l'objet de la demande de brevet EP-A-0 154 295 de la demanderesse (Priorité: 05.03.84; Date de dépôt 28.02.85; Date de publication de la demande: 11.09.85), comprenant un bloc macroporeux en céramique, verre ou métal frittés, ou en carbone, percé de canaux longitudinaux parallèles.

Le montage de plusieurs éléments de séparation par membrane de ce genre dans une enveloppe métallique se fait au moyen de joints en matière plastique ou élastique qui ont plusieurs fonctions:

- assurer la séparation entre la cavité contenant le liquide à filtrer et celle contenant le filtrat,
- maintenir en place les éléments filtrants en présence d'une forte différence de pression (pouvant atteindre plusieurs dizaines de bars) entre ces cavités,
- résister aux différences de dilatation thermique entre l'enveloppe (métallique ou en matière plastique renforcée de fibres de verre) et l'élément de séparation, généralement en matière céramique, qui peuvent atteindre jusqu'à 0,5 ou 1 mm.

Or la surface latérale extérieure de l'élément de séparation tubulaire est généralement lisse our présente des petites rugosités, soit qu'elle soit recouverte d'un émail ou d'une résine pour empêcher la communication à travers la porosité grossière du support des membranes entre les cavités du liquide à filtrer et du filtrat, soit que l'élément ait été fabriqué par extrusion. La résistance de l'élément filtrant au glissement par rapport au joint est relativement faible, d'autant plus que l'élément de séparation est souvent en présence de liquides qui jouent le rôle de lubrifiant de ce glissement, par exemple des liquides visqueux ou une solution de soude caustique, souvent utilisée pour le lavage de la surface de la membrane de séparation après filtration de produits gras, qui réagit sur ceux-ci en donnant des savons.

On a jusqu'ici recouru pour empêcher le glissement

- soit à une forte compression du joint, qui risque d'entraîner son déchirement,
- soit à un collage du joint sur l'élément. Mais il est difficile de trouver des colles qui résistent aux contraintes de cisaillement, aux corrosions chimiques par les fluides filtrés ou ceux de nettoyage, aux températures souvent élevées et au vieillissement en service,
- soit à la mise en place de butées mécaniques, qui sont coûteuses et doivent souvent être de forme compliquée, qui entraîne l'existence de cavités ou fentes difficiles à nettoyer et susceptibles d'abriter des proliférations microbiennes.

La présente invention a pour but de remédier à ces difficultés, et de procurer un assemblage de l'élément filtrant et de l'enveloppe qui l'entoure résistant bien au glissement, aux corrosions chimiques et aux températures élevées, tout en étant d'une structure simple et de fabrication peu coûteuse.

Le dispositif d'assemblage selon l'invention est caractérisé en ce que lesdites rugosités sont constituées par des reliefs ou des creux d'épaisseur ou de profondeur supérieure ou égale à 100 micromètres, et en ce que ledit point est comprimé ou moulé en place.

Il répond en outre de préférence à l'un ou l'autre des variantes de réalisation ci-après:

- L'extrémité de l'élément est revêtue d'un émail ou verre, et les rugosités sont formées par des grains grossiers dans l'émail ou verre.
- Les rugosités sont formées par des grains grossiers dispersés dans un adhésif organique déposé sur l'extrémité de l'élément filtrant.
- L'extrémité de l'élément est revêtue d'une résine synthétique, et les rugosités sont formées par des grains grossiers incrustés dans la résine synthétique.
- Les rugosités sont formées par des grains grossiers projetés à l'état au moins partiellement fondu, ou bien déposés, puis brasés sur le pour tour de l'élément filtrant.
- Les rugosités sont formées par abrasion de l'extrémité de l'élément filtrant.
- Les reliefs sont constitués par des surépaisseurs locales ou circonférentielles, formées par un ou plusieurs rubans de matière enroulés autour de l'extrémité de l'élément filtrant.
- Les creux sont circonférentiels, et résultent de déformations locales de l'extrémité de l'élément filtrant lors de sa mise en forme avant cuisson ou frittage, ou d'un usinage de l'extrémité de l'élément déjà ouit ou fritte.

La surface rugeuse ou munie de reliefs ou creux peut couvrir toute la surface de contact entre l'élément de séparation et le joint. Dans ce cas, on obtient une résistance au glissement très élevée. Mais il y a des risques de fuites si le joint n'épouse pas très exactement les variations plus ou moins irrégulières de niveau de la surface externe de l'élément.

Elle peut aussi ne couvrir qu'une partie de la surface de contact entre l'élément de séparation et le joint, et notamment être comprise entre deux surfaces non modifiées, et donc relativement lisses. Dans ce cas, l'étanchéité est mieux assurée, mais la résistance au glissement n'est pas aussi élevée que dans le premier cas.

Il est décrit ci-après, à titre d'exemples et en référence aux figures du dessin annexé, des variantes de réalisation de l'invention.

2

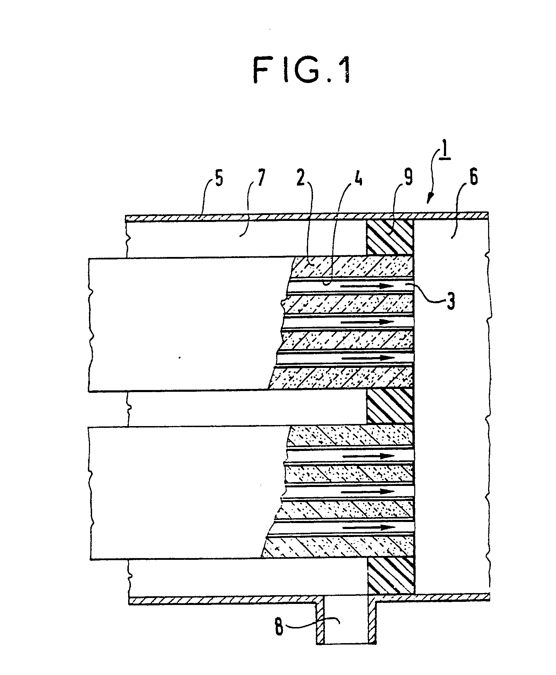

La figure 1 représente en coupe partielle l'extrémité d'un élément de filtration macroporeux percé de canaux auquel s'applique l'invention.

La figure 2 représente en coupe partielle à échelle agrandie une surface de contact entre l'élément de filtration et le joint d'étanchéité. L'extrémité de l'élément n'est pas imprégnée par un émail d'étanchéification. Les grains grossiers de matière céramique sont disposés dans un émail déposé sur l'extrémité de l'élément.

La figure 3 représente en coupe partielle à échelle agrandie une surface de contact entre l'élément de filtration et le joint assurant l'étanchéité entre cet élément et l'enveloppe métallique qui l'entoure et forme la paroi des chambres de recueil du filtrat et du liquide a filtrer. L'extrémité de l'élément est revêtue d'un émail d'étanchéification, puis d'un autre émail dans lequel ont été incorporés des grains grossiers de matière céramique.

La figure 4 représente en coupe partielle à échelle agrandie une surface de contact analogue, mais dans laquelle les grains grossiers de céramique sont liés par frittage à l'élément filtrant.

La figure 5 représente en coupe partielle à échelle agrandie une surface de contact analogue, dans laquelle des surépaisseurs circulaires locales ont été formées sur la surface de l'élément filtrant à l'aide d'un ruban de matière céramique ou résine synthétique enroulé autour de l'extrémité de l'élément.

La figure 6 représente en coupe partielle à échelle agrandie une surface de contact analogue, dans laquelle des surépaisseurs locales ponctuelles ont été formées par dépôt sur la surface de grains de matière par projection à l'état fondu ou partiellement fondu.

La figure 7 représente en coupe partielle à échelle agrandie une surface de contact analogue, dans laquelle des rainures ou creux ont été formés sur la surface extérieure de l'extrémité de l'élément.

La figure 8 représente en coupe partielle une extrémité de l'élément de filtration dont seule une partie de la surface en regard du joint a été munie de rugosités.

La figure 9 représente en coupe partielle une extrémité de l'élément de filtration, dont la totalité de la surface en regard du joint a été munie de rugosités.

La figure 10 représente en coupe un élément de filtration avec ses joints d'étanchéité aux deux extrémités et des écrous de serrage de ces joints entre des plaques d'acier.

## EXMPLE 1

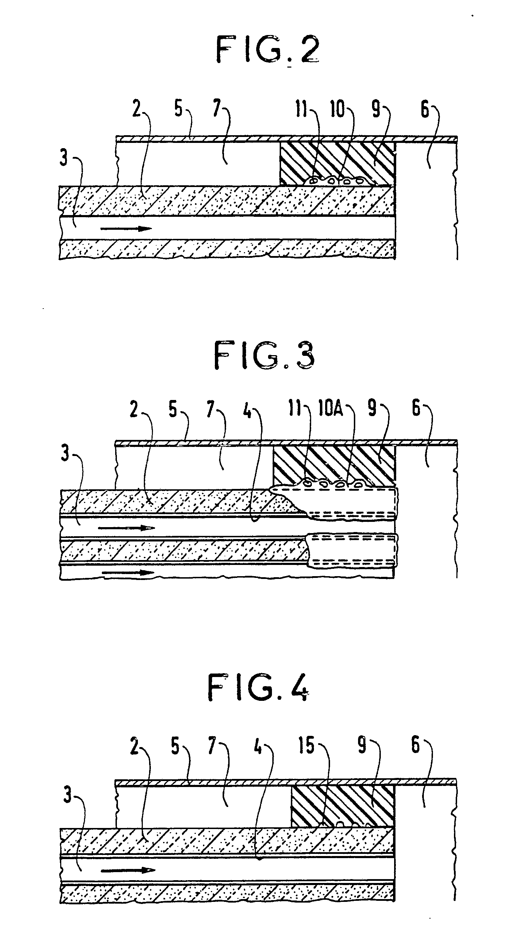

On utilise un bloc macroporeux muni de canaux longitudinaux pourvus d'une membrane de filtration formant élément de filtration tangentielle, dont l'extrémité est représentée en figure 3. Cet élément filtrant 1 comporte une surface extérieure 2, des canaux 3 où circule le fluide à filtrer, munis de membranes de filtration 4, de porosité notablement plus faible que celle du bloc. Il est entouré par une enveloppe métallique 5, qui définit à son extrémité droite une chambre 6 de recueil de l'excès de fluide à filtrer, et autour du bloc macroporeux une chambre 7 de recueil d'un filtrat. Une tubulure 8 permet l'évacuation du filtrat. Les chambres 6 et 7 sont isolées l'une de l'autre par un joint 9 en matériau élastomère.

L'extrémité de l'élément filtrant est étanchéifiée sur une longueur de 30 mm par un émail de composition pondérale

| | |
|---|---|
| $SiO_2$ | 72% |
| $Al_2O_3$ | 14% |
| MgO | 4% |
| CuO | 4,5 % |
| $K_2O$ | 3% |
| $Na_2O$ | 2,5 % |

On broie l'émail en une poudre jusqu'à obtenir un diamètre moyen de particules d'environ 1 µm. On prépare alors une barbotine de la composition pondérale suivante

| | |
|---|---|
| Poudre d'émail | 54,5 % |
| Eau | 43,7 % |
| Alcool polyvinylique (Rhodoviol 4/125 de Rhône-Poulenc) | 0,3 % |
| Tensio-actif Darvan C® (de la Société Polyplastic) | 1,5 % |

On obtient ainsi une barbotine très bien défloculée. On verse cette barbotine dans une cuve à agitation par ultra-sons. On plonge chacune des extrémités de l'élément filtrant dans le liquide sur une profondeur de 25 mm. On l'y maintient pendant 30 minutes sous agitation par les ultra-sons. A la fin de cette période, la barbotine a pénétré dans la porosité de l'extrémité de l'élément sur une hauteur de 30 mm (les 25 mm immergés plus 5 mm de montée par capillarité). On retire l'élément du bain de barbotine, on sèche la barbotine absorbée. Puis on prépare une barbotine de la composition pondérale suivante:

3

| | |
|---|---|
| Poudre d'émail | 45% |
| Grains d'alumine de dimension moyenne 180 µm | 25% |
| Alcool polyvinylique (Rhodoviol 4/125) | 0,5 % |
| Agent tensio-actif DARVAN C® | 1,5 % |
| Eau | 28% |

Cette barbotine est très visqueuse. On la dépose au pinceau sur une largeur de 8 mm, en une bande 10A qui fait le tour de l'élément filtrant macroporeux, en laissant une plage non recouverte de largeur 9 mm entre la bande et l'extrémité de l'élément. Les grains d'alumine 11 de cette seconde barbotine sont trop gros pour pénétrer dans les pores de l'élément filtrant.

On soumet l'ensemble des deux dépôts à une cuisson en atmosphere oxydante à 1300°C pour fondre l'émail. On réalise cette opération sur les deux extrémités de l'élément.

On obtient ainsi des extrémités d'élément filtrant étanchéifiées sur une longueur de 30 mm et portant au milieu de la zone étanchéifiée une bande rugueuse de largeur 9 mm.

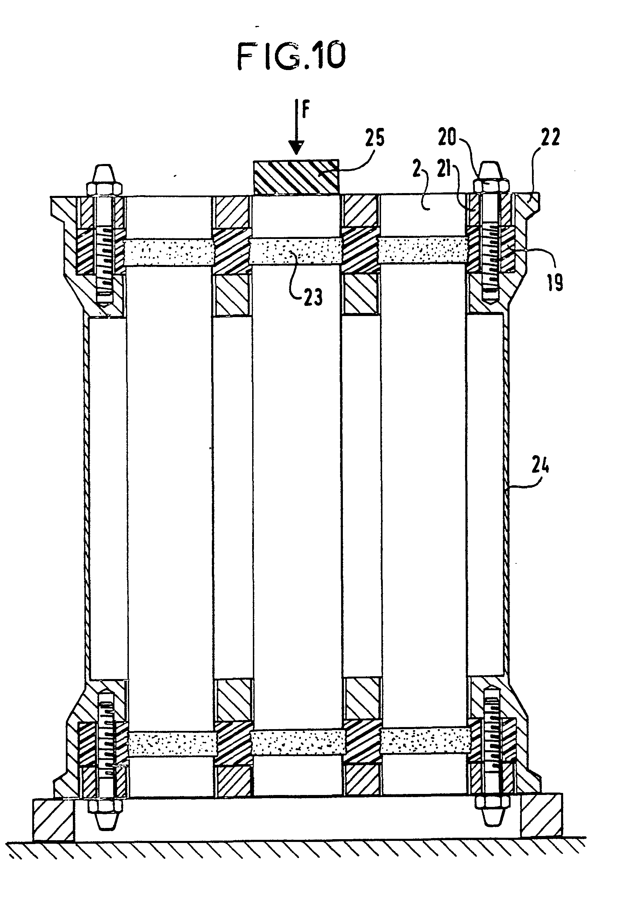

On assemble ensuite 7 éléments filtrants de ce type dans une enveloppe 24 en acier, au moyen d'un montage à joint comprimé en caoutchouc silicone de dureté Shore A de 50, comme représenté sur la figure 10, ou tous les éléments filtrants n'ont pas été représentés pour plus de clarté. Le joint 19 est comprimé à l'aide de boulons 20 par serrage entre deux plaques d'acier 21, 22 perpendiculaires à l'axe des éléments filtrants, munis éventuellement des zones rugueuses 23 au niveau du joint. On fait le vide dans l'enveloppe externe 24, puis on la remplit d'une solution de soude caustique à 5 % en poids et on la laisse écouler pendant 4 heures pour être sûr que la soude a pénétré partout où elle le pouvait.

Les plaques métalliques 21, 22 supports du joint étant immobilisées, on applique sur l'un des éléments filtrants par l'intermédiaire d'une cale 25 une force F croissante parallèle à l'axe de cet élément jusqu'à obtenir son glissement par rapport au joint. La force nécessaire pour obtenir le glissement est de:
- 300 Newtons en l'absence de zone rugueuse,
- 1700 Newtons avec la zone rugueuse obtenue comme indiquée ci-dessus.

## EXEMPLE 2

L'élément filtrant représenté en figure 2 est un tube de diamètres intérieur 7 mm et extérieur 10 mm, de diamètre moyen de pores 15 µm en alumine pure, obtenu par extrusion. Il ne comporte pas sur sa surface intérieure de couche à porosité plus fine, et de ce fait une étanchéification de ses extrémités n'est pas nécessaire.

On recouvre sa surface latérale extérieure sur une longueur de 30 mm à partir des extrémités au moyen de la seconde barbotine utilisée dans l'exemple 1, et on effectue une cuisson pour assurer la fusion de l'émail. On obtient ainsi à chaque extrémité une bande rugueuse 10 de largeur 30 mm, à particules en relief 11.

On monte sept de ces tubes dans une enveloppe métallique au moyen d'un joint élastique comprimé appliqué sur une longueur de 30 mm à partir de chaque extrémité des tubes, et recouvrant donc exactement la surface rugueuse.

On effectue le même essai que dans l'exemple 1, et on mesure les résistances limites au glissement. On obtient:
150 Newtons en l'absence de surface rugueuse,
700 Newtons avec la surface rugueuse (il se produit alors un déchirement du joint).

## EXMPLE 3

On opère comme dans l'exemple 1, mais en remplaçant l'émail par une couche 10A de résine époxy commercialisée sous la marque "Araldite", qui sert à la fois à imprégner l'extrémité de l'élément 2 (fig. 3) et à coller les grains d'alumine 11 sur la surface extérieure.

Les valeurs des résistances limites au glissement sont:
300 Newtons en l'absence de surface rugueuse,
1500 Newtons avec une surface rugueuse.

## EXEMPLE 4

Sur les éléments filtrants de l'exemple 2, on dépose une composition céramique pâteuse comprenant (en poids):

| Alumine de dimension moyenne de grain 0,5 μm | 35% |
|---|---|
| Alumine de dimension moyenne de grain 10 μm | 40% |
| Méthylhydroxypropylcellulose | 1% |
| Agent tensio-actif Darvan C® | 0,5 % |
| Eau | 23,5 % |

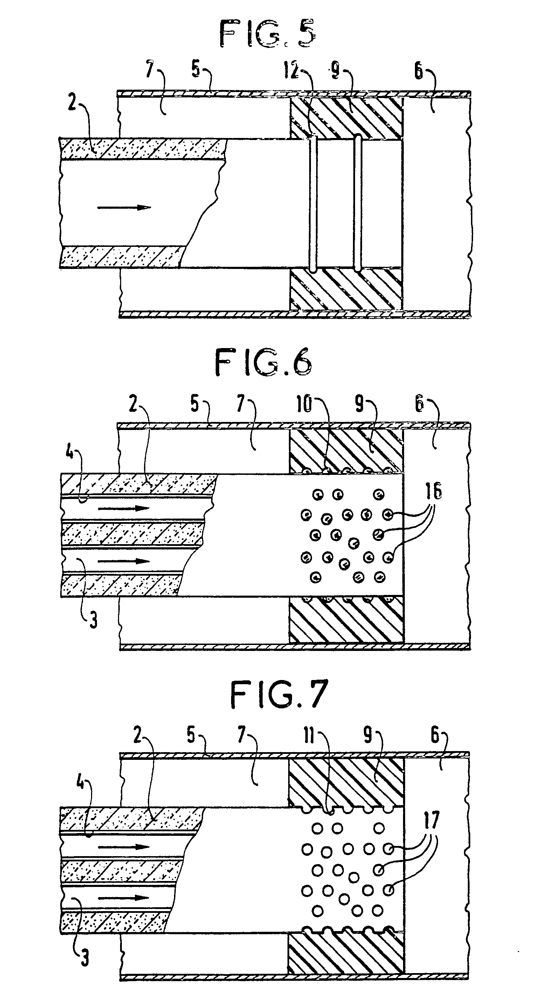

de manière à former après frittage sur la surface latérale extérieure de chaque extrémité de l'élément deux bourrelets (12, fig. 5) qui font le tour de l'élément, de largeur 4 mm et d'épaisseur 0,8 mm, situés à des distances de 10 mm et 18 mm de l'extrémité de l'élément.

L'essai de résistance au glissement donne les résistances limites:
150 Newtons en l'absence de bourrelet,
600 Newtons en présence des bourrelets.

## EXEMPLE 5

On procède comme dans l'exemple 4, sauf en ce qui concerne les bourrelets de matière céramique, qui sont remplacés par des bourrelets de la composition pondérale suivante:

| Résine époxy | 20 % |
|---|---|
| Charge (grains d'alumine de dimension moyenne 100 μm) | 80 % |

Les forces limites à l'essai de resistance au glissement sont les suivantes:
150 Newtons en l'absence de bourrelet,
650 Newtons en présence des bourrelets.

## EXEMPLE 6

On utilise le même élément filtrant que celui de l'exemple 2. Au cours de la fabrication du tube constituant cet élément, juste après son extrusion, au moment où il est encore sous forme de pâte plastique, on le déforme de manière à créer à chaque extrémité une rainure circonférentielle de largeur 8 mm, et de profondeur 0,5 mm, à une distance de 15 mm de l'extrémité.

On emploie par contre un joint en caoutchouc silicone collé. Pour améliorer l'adhérence entre les différents matériaux, on effectue un traitement préalable des parties actives de l'élément filtrant et de l'enveloppe à l'aide d'un primaire tel que le produit 1200 commercialisé par la Société Dow Corming, et un moulage en place du joint.

Les valeurs des forces limites à l'apparition du glissement sont:
150 Newtons en l'absence de rainure,
400 Newtons en présence d'une rainure.

## EXEMPLE 7

On utilise le bloc macroporeux percé de canaux longitudinaux de l'exemple 1, en l'imprégnant à l'émail sur 30 mm à chaque extrémité.

On forme sur la surface extérieure émaillée une zone rugueuse (13, fig. 8) par sablage sur une largeur de 12 mm, au milieu de la zone émaillée (en utilisant un masque pour ne pas sabler la partie de la zone émaillée qui doit rester lisse).

Les valeurs limites des forces à l'amorce de glissement sont:
300 Newtons en l'absence de zone rugueuse,
500 Newtons en présence d'une zone rugueuse.

## EXEMPLE 8

On opère comme dans l'exemple 4, mais en formant les bourrelets comme suit. On forme par schoopage de poudre d'alumine (projection de particules fondues dans une flamme) trois bourrelets de largeur 3 mm et d'épaisseur 0,4 mm, en utilisant des masques pour limiter la projection à la zone où l'on doit former les bourrelets.

Les valeurs limites des forces à l'amorce de glissement sont les suivantes:

150 Newtons en l'absence de bourrelet,
650 Newtons en présence des bourrelets.

**EXEMPLE 9**

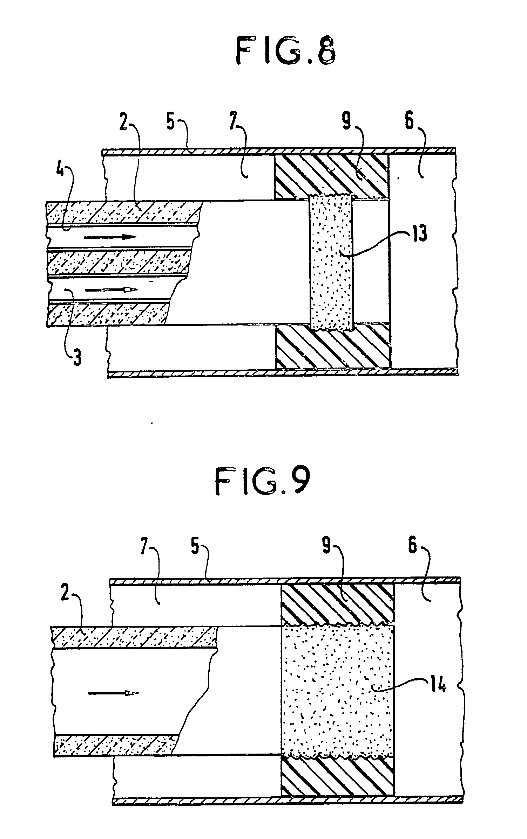

L'élément filtrant est un tube en acier inoxydable (2, fig. 9) de diamètres intérieur 15 mm et extérieur 30 mm, obtenu par frittage d'une poudre d'acier inoxydable de diamètre moyen de particules 30 µm. On recouvre sa surface externe 14 sur une longueur de 30 mm à partir de chaque extrémité d'un mélange constitué de 4 parties en poids d'une composition de brasure cuivre-argent, et d'une partie de petites balles d'acier inoxydable de diamètre moyen 100 µm enrobées dans une colle organique.

On soumet l'élément à un traitement thermique à 700°C, au cours duquel la brasure fond. Les petites billes liées par la brasure forment une couche rugueuse sur la surface externe de l'élément, tandis que l'excès de brasure est absorbé par capillarité par la porosité de l'élément.

L'essai de résistance au glissement donne les résultats suivants:

250 Newtons en l'absence de zone rugueuse,
1200 Newtons en présence de zone ruqueuse.

Dans l'élément de filtration représenté en figure 4, des grains grossiers de céramique 15 ont été disposés sur la surface externe de l'élément filtrant à l'aide d'une colle organique. On effectue ensuite un frittage, au cours duquel la colle organique est brûlée et les grains de céramique sont liés à la surface externe de l'élément.

Dans l'élément de filtration représenté en figure 6, des protubérances 16, par exemple en matière céramique, sont disposées sur la zone de la surface externe de l'extrémité de l'élément en regard du joint 9. Elles sont obtenues comme suit. Avant ou après le frittage de l'élément, on dépose sur son extrémité un ruban de pâte céramique, et on effectue une cuisson pour assurer le frittage de ce ruban et sa liaison avec la surface de l'élément. On peut aussi utiliser des grains de matière céramique liés entre eux et avec la surface de l'élément par un émail, ou par une résine polymérisable, chargée ou non de grains de matière minérale. Ces protubérances peuvent enfin être réalisées par déformation locale de la matière de l'élément filtrant lors de sa mise en forme.

La figure 7 représente des dépressions 17 formées dans la surface externe de l'extrémité de l'élément filtrant. Elles sont obtenues soit par déformation locale de la matière de l'élément lors de sa mise en forme, soit par usinage après cette mise en forme.

Le dispositif selon l'invention permet en premier lieu, comme l'on montré les essais décrits dans les exemples, d'augmenter très notablement la résistance au glissement de l'élément filtrant par rapport au joint. L'élément ne bouge pas lors du serrage du joint comprimé. En service, les joints comprimés sur les surfaces lisses ne maintiennent pas suffisamment à la longue les éléments filtrants, qui se décalent longitudinalement sous l'influence des différences de pression, des montées et descentes en pression, des coups de bélier éventuels, ainsi que des dilatations thermiques différentielles. Le danger de décalage longitudinal du joint en service est encore plus important dans le cas d'un joint collé.

On évite ainsi d'avoir à recouvrir pour éviter ce décalage à des butées mécaniques, notamment par un usinage coûteux des plaques qui compriment le joint.

L'invention permet aussi d'utiliser des joints en une matière plus flexible, puisque l'on n'a pas besoin de serrer aussi fortement le joint autour de l'élément filtrant. Ces joints plus flexibles supportent mieux les déformations engendrées par les dilatations différentielles entre l'enveloppe généralement métallique et les éléments filtrants généralement en céramique.

**Revendications**

1. Dispositif d'assemblage d'au moins un élément filtrant tubulaire (2) dans une enveloppe (5) entourant cet élément, comprenant un joint (9) en matériau élastomère ou polymère disposé à au moins l'une des extrémités de l'élément filtrant et de l'enveloppé entre la surface externe de l'élement filtrant et la surface interne de l'enveloppe, la surface externe de l'élément filtrant étant munie de rugosités sur au moins une partie de la longueur en regard du joint, caractérisé en ce que lesdites rugosités sont constituées par des reliefs (12, 16) ou des creux (27) d'épaisseur ou de profondeur supérieure ou égale 100 micromètres, et en ce que ledit joint est comprimé ou moulé en place.

2. Dispositif selon la revendication 1, dans lequel l'extrémité de l'élément est revêtue d'un émail ou verre, caractérisé en ce que les rugosités sont formées par des grains grossiers dans l'émail ou le verre.

3. Dispositif selon la revendication 1, caractérisé en ce que les rugosités sont formées par des grains grossiers dispersés dans un adhésif organique déposé sur l'extrémité de l'élément filtrant.

4. Dispositif selon la revendication 1, dans lequel l'extrémité de l'élément est revêtue d'une résine synthétique, caractérisé en ce que les rugosités sont formées par des grains grossiers incrustés dans la résine synthétique.

5. Dispositif selon la revendication 1, dans lequel les reliefs sont constitués par des surépaisseurs locales (16) ou circonférentielles (12), caractérisé en ce que celles-ci sont formées par un ou plusieurs rubans de matière enroulés autour de l'extrémité de l'élément filtrant.

**Patentansprüche**

1. Vorrichtung zur Montage mindestens eines rohrförmigen Filterelements (2) in einem Behälter (5), der dieses Element umgibt, mit einer Dichtung (9) aus einem Elastomer- oder Polymermaterial, die an mindestens einem Ende des Filterelements und des Behälters zwischen der äußeren Oberfläche des Filterelements und der inneren Oberfläche des Behälters angeordnet ist, wobei die äußere Oberfläche des Filterelements über mindestens einen Teil der Länge gegenüber der Dichtung aufgerauht ist, dadurch gekennzeichnet, daß die Aufrauhungen von Vorsprüngen (12, 16) oder Vertiefungen (17) einer Höhe oder Tiefe größer/gleich 100 Mikrometer gebildet werden und daß die Dichtung in situ komprimiert oder aufgegossen wird.

2. Vorrichtung nach Anspruch 1, in der das Ende des Elements mit einem Email oder Glas beschichtet ist, dadurch gekennzeichnet, daß die Aufrauhungen von groben Körnern im Email oder Glas gebildet werden.

3. Vorrichtung nach Anspruch 1, dadurch gekennzeichnet, daß die Aufrauhungen von groben Körnern gebildet werden, die in einem auf das Ende des Filterelements aufgebrachten organischen Kleber dispergiert sind.

4. Vorrichtung nach Anspruch 1, in der das Ende des Elements mit einem Kunstharz beschichtet ist, dadurch gekennzeichnet, daß die Aufrauhungen durch grobe Körnern gebildet werden, die in das Kunstharz eingebracht sind.

5. Vorrichtung nach Anspruch 1, in der die Vorsprünge von örtlichen (16) oder in Umfangsrichtung verlaufenden verdickten Bereichen (12) gebildet werden, dadurch gekennzeichnet, daß diese Bereiche durch mindestens ein Materialband gebildet werden, das um das Ende des Filterelements gewickelt wird.

**Claims**

1. A system for mounting at least one tubular filter member (2) inside an envelope (5) surrounding said member, the system including a gasket (9) of elastomer or polymer material disposed at at least one of the ends of the filter member and of the envelope between the outside surface of the filter member and the inside surface of the envelope, the outside surface of the filter member being provided with roughnesses on at least a portion of its length which faces the gasket, characterized in that said roughnesses are constituted by projections (12, 16) or hollows (17) having a thickness or depth above or equal to 100 μm, and that said gasket is compressed or molded in situ.

2. A system according to claim 1, wherein the end of the filter member is covered by an enamel or glass, characterized in that the roughnesses are constituted by large grains in the enamel or glass.

3. A system according to claim 1, characterized in that the roughnesses are constituted by large grains dispersed in an organic adhesive which is deposited on the end of the filter member.

4. A system according to claim 1, wherein the end of the filter member is covered by a synthetic resin, characterized in that the roughnesses are formed by large grains encrusted into the synthetic resin.

5. A system according to claim 1, wherein the projections are constituted by local (16) or circumferential (12) excess thicknesses, characterized in that these ticknesses are made up from one or more tapes of material wound around the end of the filter member.

# FIG.1

# FIG. 2

# FIG. 3

# FIG. 4

# FIG. 5

# FIG.6

# FIG.7

# FIG.8

# FIG.9

# FIG.10